# EUROPEAN PATENT APPLICATION

(11) **EP 4 007 221 A1**
(43) Date of publication of application: **01.06.2022**
(21) Application number: 21829584.8
(22) Date of filing: 28.05.2021
(51) Int. Cl.: H04L 12/707, H04L 12/905

(54) **COMMUNICATION SYSTEM, COMMUNICATION DEVICE, COMMUNICATION METHOD, AND NON-TRANSITORY COMPUTER-READABLE MEDIUM**

(30) Priority: 23.06.2020 JP 2020107454
(71) Applicant: NEC Corporation, 108-8001 Tokyo (JP)
(72) Inventor: ONISHI, Takeo, Tokyo 108-8001 (JP)
(74) Representative: MacDougall, Alan John Shaw
(86) International application number: PCT/JP2021/020533
(87) International publication number: WO 2021/261175

(57) **Abstract**

A communication system (1) according to the present example embodiment includes a reception device (2) and a transmission apparatus (3) communicating with the reception device (2), and the transmission apparatus (3) includes a data processing unit (4) that encapsulates communication data relating to a communication when the communication data are unicast data, and does not encapsulate the communication data at least either when the communication data are multicast data or when the communication data are broadcast data, and a transmission unit (5) that transmits the communication data encapsulated by the data processing unit (4) to the reception device (2). With this, a communication system preventing increase in a communication load can be provided.

## Description

### Technical Field

The present invention relates to a communication system, a communication apparatus, a communication method, and a non-transitory computer readable medium.

### Background Art

In wireless communication, acquiring stable communication quality at all times is not easy since the communication quality changes depending on situations. One method for maintaining stable communication quality is that a terminal mounts thereon a plurality of wireless interfaces and, at a time of performing a wireless communication, the terminal communicates by using a wireless interface with high communication quality.

As a technique for easy switching of a wireless interface (communication path), a technique of using a communication tunnel through which a data packet is encapsulated in such a way as to enable communication even with protocols differing between transmission and reception sides is employed.

PTL 1 describes a technique of encapsulating a packet in communication using a virtual extensible local area network (VXLAN). Herein, in packet encapsulation in the VXLAN, a packet is addressed not to a multicast IP address for the VXLAN, but to a unicast IP address of a transfer server.

### Citation List

### Patent Literature

[PTL 1] Japanese Patent No. 6379702

### Summary of Invention

### Technical Problem

In communication using encapsulation described above, there arises a problem that an amount of data for communication may increase (a communication load increases) due to encapsulation. In the above technique described in PTL 1, a communication load due to packet encapsulation is reduced by addressing a packet to a unicast IP address of a transfer server at a time of encapsulation. However, PTL 1 is based on a premise that a virtual network is configured by using the VXLAN, and a communication load cannot be reduced in some cases because some network devices do not support the VXLAN scheme.

An object of the present disclosure is to provide a communication system, a communication apparatus, a communication method, and a non-transitory computer readable medium for preventing increase in a communication load.

### Solution to Problem

A communication system according to the present example embodiment includes a reception device and a transmission apparatus communicating with the reception device, and the transmission apparatus includes a data processing unit that encapsulates communication data relating to a communication when the communication data are unicast data, and does not encapsulate the communication data at least either when the communication data are multicast data or when the communication data are broadcast data, and a transmission unit that transmits the communication data encapsulated by the data processing unit to the reception device.

A communication apparatus according to the present example embodiment includes a data processing means for encapsulating communication data relating to a communication when the communication data are unicast data, and not encapsulating the communication data at least either when the communication data are multicast data or when the communication data are broadcast data, and a transmission means for transmitting the communication data encapsulated by the data processing means to another device.

A communication method to be executed by a communication apparatus according to the present example embodiment includes a step of encapsulating communication data relating to a communication and transmitting the encapsulated communication data to a reception device when the communication data are unicast data, and a step of not encapsulating the communication data at least either when the communication data are multicast data or when the communication data are broadcast data.

A non-transitory computer readable medium according to the present example embodiment stores a program that causes a computer to execute a step of encapsulating communication data relating to a communication and transmitting the encapsulated communication data to a reception device when the communication data are unicast data, and a step of not encapsulating the communication data at least either when the communication data are multicast data or when the communication data are broadcast data.

### Advantageous Effects of Invention

According to the present disclosure, a communication system, a communication apparatus, a communication method, and a non-transitory computer readable medium for preventing increase in a communication load can be provided.

### Brief Description of the Drawings

Fig. 1 is a configuration diagram of a communication system according to a related art.
Fig. 2 is a block diagram of a wireless terminal according to the related art.
Fig. 3 is a block diagram of a relay apparatus according to the related art.
Fig. 4 is a configuration diagram of a communication system according to a first example embodiment.
Fig. 5 is a configuration diagram of a communication system according to a second example embodiment.
Fig. 6 is a block diagram of a relay apparatus according to the second example embodiment.
Fig. 7 is a block diagram of a wireless terminal according to the second example embodiment.
Fig. 8 is a flowchart illustrating processing of the relay apparatus according to the second example embodiment.
Fig. 9 is a flowchart illustrating processing of the wireless terminal according to the second example embodiment.
Fig. 10 is a block diagram illustrating one example of a hardware configuration of an apparatus according to the first and second example embodiments.

### Description of Embodiments

First, a related art of the present application is described. In wireless communication, following two methods are conceivable to switch a plurality of wireless interfaces for use. A first method is to prepare an L2 switch in a terminal, make a plurality of wireless interfaces belong to the switch, and activate only a wireless interface to use. A second method is to virtualize a plurality of wireless interfaces as one communication path.

A communication path generated by the first method is a redundantly expanded wireless path of a so-called wireless local area network (LAN) Ethernet converter. When a packet is transmitted from a terminal, the terminal selects, as a packet transmission source interface, a communication interface of another terminal other than a wireless interface connected to an L2 switch or an L2 switch prepared in the terminal. Thereafter, the terminal transmits data via the selected wireless interface. At this time, the terminal enters a media access control (MAC) address of the selected wireless interface in the Address 2 field of the Institute of Electrical and Electronics Engineers (IEEE) 802.11 header, and enters a MAC address of the packet transmission source in the Address 4 field. In other words, data transmission is performed by using a packet of four-address configuration. Note that, designating a wireless interface connected to an L2 switch directly as a transmission source interface is not preferred, since inconsistency occurs in an address resolition protocol (ARP) table of a device that is a communication partner of the terminal at a time of switching of a communication path.

The first method has some problems. First, some commerciallyavailable access points do not allow a packet of four-address configuration, and a communication cannot be performed in some cases when the method is employed. Further, when an operating system (OS) not supporting four-address configuration is used in a terminal, a developer has to implement software of four-address configuration on the terminal by him/herself. This increases development and maintenance cost for software.

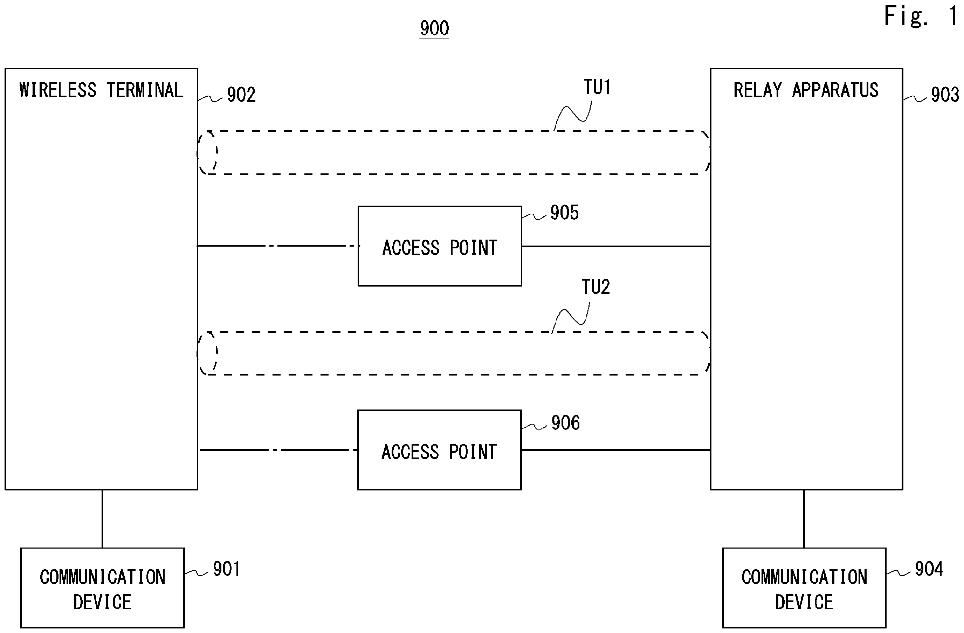

The second method is to solve the problems of the first method. Hereinafter, the second method is described with reference to Fig. 1. In a communication system 900 illustrated in Fig. 1, a communication device 901 and a communication device 904 communicate data through a wireless terminal 902 and a relay apparatus 903. The relay apparatus 903 is arranged oppositely to the wireless terminal 902 across a communication channel. The wireless terminal 902 and the relay apparatus 903 are each provided with a plurality of tunnel interfaces (communication tunnels) TU1 and TU2, and a tunneling protocol such as Generic Routing Encapsulation (GRE) or Layer 2 Tunneling Protocol (L2TP) is used for the tunnel interfaces TU1 and TU2. Access points 905 and 906 relay communications between the wireless terminal 902 and the relay apparatus 903. Wireless communications are performed between the wireless terminal 902 and the access points 905 and 906 (indicated by dashed lines in Figs. 1 to 3).

When a communication is performed between the wireless terminal 902 and the relay apparatus 903, a tunnel interface with best communication quality is selected from the tunnel interfaces TU1 and TU2, and a packet is transferred through the selected tunnel interface. Therefore, one virtual communication path is present between a switch of the wireless terminal 902 and a switch of the relay apparatus 903.

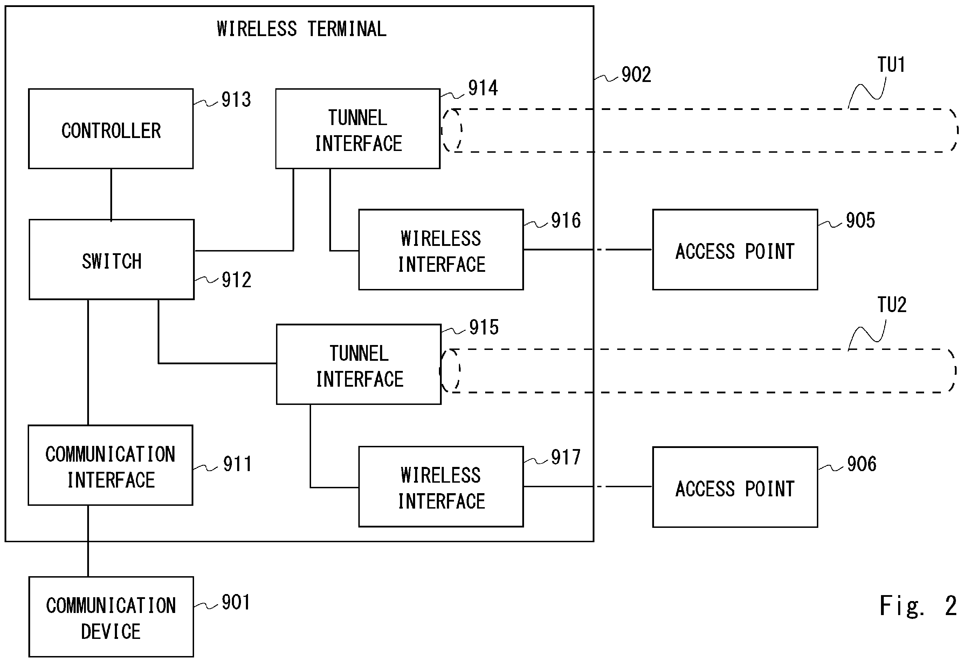

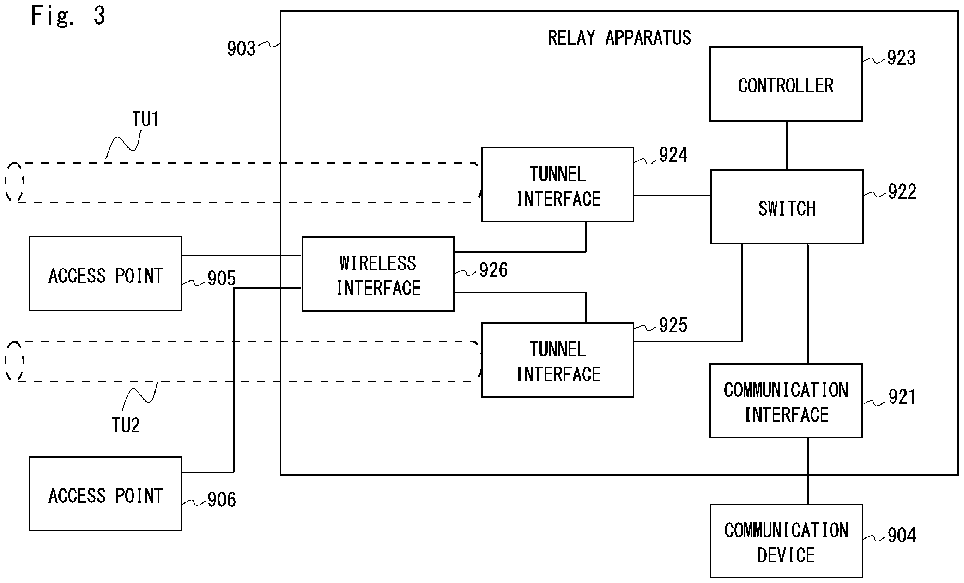

Next, the wireless terminal 902 and the relay apparatus 903 are described in further detail by using Figs. 2 and 3. As illustrated in Fig. 2, the wireless terminal 902 includes a communication interface 911, a switch 912, a controller 913, tunnel interfaces 914 and 915, and wireless interfaces 916 and 917. As illustrated in Fig. 3, the relay apparatus 903 includes a communication interface 921, a switch 922, a controller 923, tunnel interfaces 924 and 925, and a wireless interface 926.

When the communication device 901 transmits a packet to the communication device 904, first, the communication device 901 transmits a packet to the communication interface 911. The transmitted packet is output by the switch 912 to a path of either the tunnel interface 914 or 915. The switch 912 can switch, under control of the controller 913, a communication path in such a way that a tunnel interface with better communication quality is selected for communication.

The tunnel interface 914 or 915 encapsulates the acquired packet in accordance with a protocol such as GRE, and sends the encapsulated packet from either the wireless interface 916 or 917 connected thereto. The packet sent from either the wireless interface 916 or 917 is received by the wireless interface 926 of the relay apparatus 903 via either the access point 905 or 906.

The packet encapsulated by the tunnel interface 914 is decapsulated (encapsulation is canceled) by the tunnel interface 924 associated to the tunnel interface 914. The packet encapsulated by the tunnel interface 915 is decapsulated by the tunnel interface 925 associated to the tunnel interface 915. The packet decapsulated by the tunnel interface 924 or 925 is output by the switch 922 to the communication interface 921. The communication interface 921 transmits the packet to the communication device 904.

When the communication device 904 communicates data to the communication device 901, data are transmitted via a reverse path of the above. A packet transmitted from the communication device 904 to the communication interface 921 is output by the switch 922 to a path of either the tunnel interface 924 or 925. The switch 922 can switch, under control of the controller 923, a communication path in such a way that a tunnel interface with better communication quality is selected for communication.

The tunnel interface 924 or 925 encapsulates the acquired packet in accordance with a protocol such as GRE, and sends the packet from the wireless interface 926 connected thereto. The sent packet is received by either the wireless interface 916 or 917 of the wireless terminal 902 via either the access point 905 or 906. The packet encapsulated by the tunnel interface 924 is decapsulated by the tunnel interface 914, and the packet encapsulated by the tunnel interface 925 is decapsulated by the tunnel interface 915. The decapsulated packet is output by the switch 922 to the communication interface 921, and the communication interface 921 transmits the packet to the communication device 901.

Use of the second method allows for changing a communication path by setting external transmission source and destination addresses of an encapsulated packet according to a selected communication path. This eliminates need to use a packet of four-address configuration as in the first method. Further, changing a communication path involves no concern about occurrence of inconsistency in an ARP table, since there is no need to rewrite internal address information of an encapsulated packet.

Note that, two kinds of switches are conceivable as switches for a wireless terminal and a relay apparatus; an L2 switch and an L3 switch. In association with types of switches, two kinds of tunnels are conceivable; an L2 tunnel and an L3 tunnel.

For example, when the L2 tunnel is used in the communication system described in Figs. 1 to 3, a communication between the communication device 901 connected to the wireless terminal 902 and the communication device 904 connected to the relay apparatus 903 is an L2 connection. In other words, communication devices at opposite ends of a wireless communication channel are connected in L2. In a wireless network that accommodates a large number of wireless devices such as an office or a factory, communication devices at opposite ends of a wireless communication are generally connected in L2. Thus, such a wireless network and a technique of the L2 tunnel have a high affinity.

On the other hand, when the L3 tunnel is used in the communication system described in Figs. 1 to 3, the communication device 901 connected to the wireless terminal 902 and the communication device 904 connected to the relay apparatus 903 have IP addresses belonging to different subnet spaces. By employing this configuration, communication devices at opposite ends of a wireless communication channel are connected in L3. An access point for home use or the like that is supposed to accommodate a small number of wireless devices often operates in a router mode, and such a network uses the L3 tunnel. In a configuration of the L3 tunnel, generally, a communication in a direction from a wireless terminal side to an access point has no problem, whereas a communication in a reverse direction of the above or a communication between wireless slave units involves an operational problem because of necessity of routing setting or the like. Thus, the L2 tunnel has an advantage in terms of wideness of an application environment or operational easiness in comparison with the L3 tunnel.

As described, use of the L2 tunnel enables flexible switching of a communication path. On the other hand, there arises a problem that a communication load increases due to encapsulation of a broadcast packet or a multicast packet. In a wireless LAN, a broadcast packet or a multicast packet can be transmitted at once to all terminals belonging to an access point, but, when encapsulated, needs to be transmitted individually to each terminal. This degrades spectral efficiency. In consideration of the above, the present disclosure addresses a technique for reducing a communication load in use of a broadcast packet or a multicast packet while keeping flexibility of a wireless path.

### First Example Embodiment

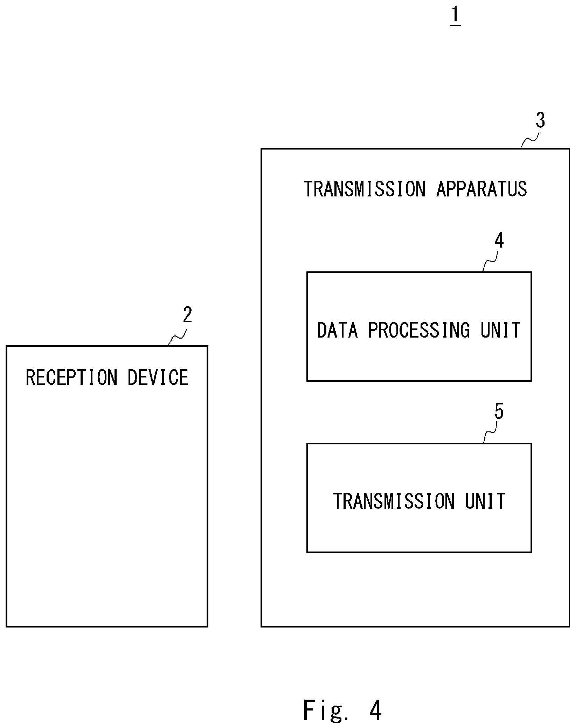

Hereinafter, a first example embodiment of the present disclosure is described with reference to the drawings. Fig. 4 is a schematic diagram illustrating a configuration of a communication system 1 according to the first example embodiment. The communication system 1 includes a reception device 2 and a transmission apparatus 3.

The reception device 2 is a device that communicates with the transmission apparatus 3, and the transmission apparatus 3 transmits communication data to the reception device 2 that is another device. The transmission apparatus 3 may transmit communication data by wire or wirelessly to the reception device 2. Further, the reception device 2 may transfer received communication data to another device by wire or wirelessly. For example, the reception device 2 or a device receiving transfer of communication data from the reception device 2 may wirelessly transmit communication data to a terminal configuring a wireless network (for example, a wireless LAN) with the device.

The transmission apparatus 3 includes a data processing unit 4 and a transmission unit 5. When communication data handled by the transmission apparatus 3 are unicast data, the data processing unit 4 encapsulates the communication data. However, at least either when communication data handled by the transmission apparatus 3 are multicast data or when communication data handled by the transmission apparatus 3 are broadcast data, the data processing unit 4 does not encapsulate the communication data. In other words, the data processing unit 4 may not encapsulate communication data when the communication data are multicast data or when the communication data are broadcast data, and may encapsulate communication data otherwise. Alternatively, the data processing unit 4 may not encapsulate communication data both when the communication data are multicast data and when the communication data are broadcast data.

Note that, "communication data are unicast data" means that communication data are to be transmitted to one particular device. "Communication data are multicast data" means that communication data are to be transmitted to a plurality of particular devices. "Communication data are broadcast data" means that communication data are to be transmitted to all devices connected to a network through which the communication data are transmitted. A transmission method such as unicast, multicast, or broadcast is determined by assuming that, for example, a packet of communication data is a unicast packet, a multicast packet, or a broadcast packet, but not limited thereto.

The data processing unit 4 outputs encapsulated communication data to the transmission unit 5. The transmission unit 5 transmits the communication data encapsulated by the data processing unit 4 to the reception device 2.

Note that, the data processing unit 4 may output not encapsulated multicast data or broadcast data to the transmission unit 5. For example, when the transmission apparatus 3 transmits multicast data or broadcast data generated by the transmission apparatus 3 itself to another device, the data processing unit 4 outputs the data to the transmission unit 5 without encapsulating the data. Further, when the transmission apparatus 3 receives multicast data from another apparatus and the reception device 2 is a device that is a destination of the data, the data processing unit 4 outputs the data to the transmission unit 5 without encapsulating the data. Similar processing is performed even when the reception device 2 is a device present between the transmission apparatus 3 and a device that is a destination of data on a communication path. The data processing unit 4 outputs the data to the transmission unit 5 without encapsulating the data. The transmission unit 5 transmits the output data to the reception device 2.

However, the data processing unit 4 may not output not encapsulated multicast data or broadcast data to the transmission unit 5. For example, when the transmission apparatus 3 receives broadcast data from another apparatus, the transmission apparatus 3 does not need to transfer the data to other apparatuses, since the broadcast data are transmitted by the another apparatus to all nodes (devices) on the same network as the apparatus. Further, even when the transmission apparatus 3 receives multicast data from another apparatus and the reception device 2 is neither a destination of the data nor a device present between the transmission apparatus 3 and a device that is a destination on a communication path, the transmission apparatus 3 does not need to transfer the data to the reception device 2. Therefore, the transmission apparatus 3 does not need to transmit the data to the reception device 2.

Since communication data transmitted by multicast or broadcast are addressed to a plurality of devices as transmission destinations thereof, encapsulating data induces need to perform transmission processing individually on individual devices that are destinations of the data. This increases a communication load. However, in a communication method according to the first example embodiment, communication data are not encapsulated at least either when the communication data are multicast data or when the communication data are broadcast data. This eliminates need to perform transmission processing individually on individual devices that are destinations of the data, and can prevent increase in a communication load caused by encapsulation.

### Second Example Embodiment

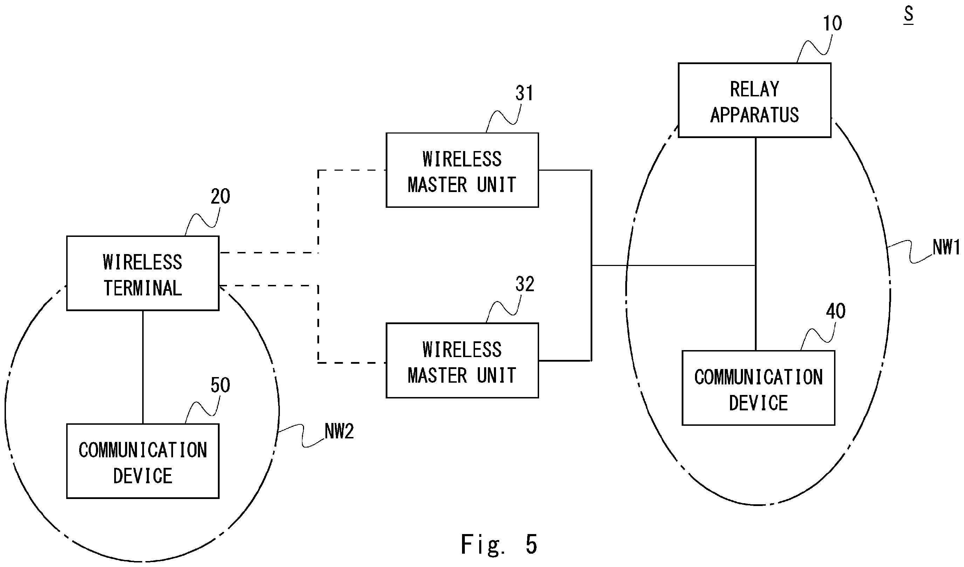

A second example embodiment of the present disclosure is described below with reference to the drawings. Fig. 5 is a schematic diagram illustrating a configuration of a communication system S according to the second example embodiment. The communication system S includes a relay apparatus 10, a wireless terminal 20, wireless master units 31 and 32, and communication devices 40 and 50. In the communication system S, the relay apparatus 10 and the communication device 40 form a network NW1, and the wireless terminal 20 and the communication device 50 form a network NW2. Note that, the number of wireless terminals 20, wireless master units 31 and 32, and communication devices 40 and 50 is not limited to one, but may be any number.

In Fig. 5, a connection drawn by a solid line represents a wired communication, and a connection drawn by a dashed line represents a wireless communication. However, a wired communication is replaceable with a wireless communication.

Hereinafter, an overview of the components is described. The relay apparatus 10 is a relay apparatus that relays a communication between the communication device 40 and the wireless terminal 20 or the communication device 50. The relay apparatus 10 temporarily receives, by wire, a packet transmitted by the communication device 40 or another communication device belonging to the network NW1 to the wireless terminal 20 or the communication device 50, and thereafter transfers the packet to the wireless terminal 20 or the communication device 50 through the wireless master unit 31 or 32. Herein, the relay apparatus 10 is equivalent to the transmission apparatus 3 according to the first example embodiment, and at least any of the wireless master units 31 and 32, the wireless terminal 20, and the communication device 50 is equivalent to the reception device 2 according to the first example embodiment.

At a time of transferring a packet to the network NW2 side, the relay apparatus 10 encapsulates a packet by using a protocol such as GRE or L2TP, and thereafter transmits the encapsulated packet to the NW2 side. At a time of transferring a packet, the relay apparatus 10 encapsulates a packet as needed.

Further, the relay apparatus 10 can also receive a packet by wire transmitted from the NW2 side. When a destination of a received packet is the own apparatus, the relay apparatus 10 processes the packet in the own apparatus. When a destination of a received packet is the communication device 40 or another communication device belonging to the network NW1, the relay apparatus 10 transfers the packet to the device. Furthermore, when receiving an encapsulated packet, the relay apparatus 10 decapsulates the packet.

The wireless terminal 20 communicates with the relay apparatus 10, the communication device 40, or another communication device belonging to the network NW1 via the wireless master unit 31 or 32, by wirelessly communicating with the wireless master units 31 and 32 using a wireless communication standard of a wireless LAN or the like. Further, the wireless terminal 20 communicates, by wire, also with the communication device 50 or another communication device belonging to the network NW2.

The wireless terminal 20 transmits, to the relay apparatus 10 via the wireless master unit 31 or 32, a packet transmitted from the communication device 50 or another communication device belonging to the network NW2 or a packet generated and to be transmitted by the wireless terminal 20 itself. At this time, the wireless terminal 20 encapsulates a packet to be transmitted by using a protocol such as GRE or L2TP as needed. Further, the wireless terminal 20 temporarily receives a packet transmitted from the relay apparatus 10 via the wireless master unit 31 or 32. When a destination of a received packet is the own apparatus, the wireless terminal 20 processes the packet in the own apparatus. When a destination of a received packet is the communication device 50 or another communication device belonging to the network NW2, the wireless terminal 20 transfers the packet to the device. Furthermore, when a packet is encapsulated, the wireless terminal 20 decapsulates the packet.

The wireless master units 31 and 32 connect communications between the wireless terminal 20 and the relay apparatus 10 by wirelessly communicating with the wireless terminal 20 and also communicating with the relay apparatus 10 by wire. The wireless master units 31 and 32 are, for example, access points of a wireless LAN.

The communication devices 40 and 50 are communication devices that communicate with each other through the relay apparatus 10, the wireless master unit 31 or 32, and the wireless terminal 20. The communication device 40 belongs to NW1 on the relay apparatus 10 side, and the communication device 50 belongs to NW2 on the wireless terminal 20 side.

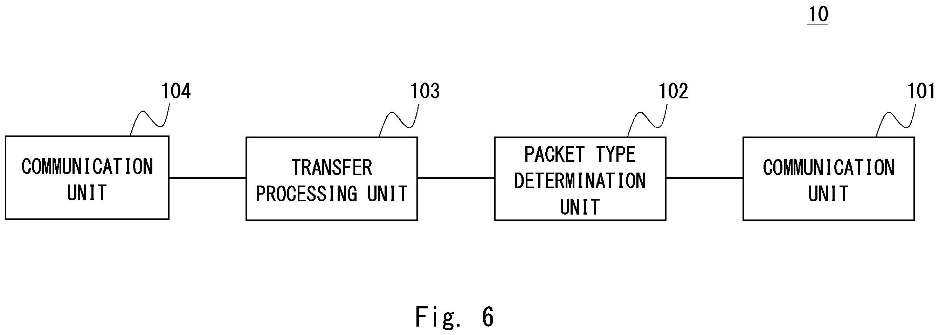

Next, details of configurations of the relay apparatus 10 and the wireless terminal 20 are described. Fig. 6 is a block diagram illustrating a configuration of the relay apparatus 10. As illustrated in Fig. 6, the relay apparatus 10 includes a communication unit 101, a packet type determination unit 102, a transfer processing unit 103, and a communication unit 104.

The communication unit 101 is a communication unit connected to the NW1 side, and receives a packet from a device (for example, the communication device 40) on the NW1 side. Further, the communication unit 101 transmits a packet received from the NW2 side to a device (for example, the communication device 40) on the NW1 side that is a destination of the packet. The packet to be transmitted to a device on the NW1 side is a unicast packet decapsulated by the transfer processing unit 103, or a multicast packet or a broadcast packet received in a non-encapsulated state from the NW2 side.

The packet type determination unit 102 refers to a destination address of a packet received by the communication unit 101, and determines whether the packet is a unicast packet. When the packet is a unicast packet, the packet is output to the transfer processing unit 103. Further, when the packet is not a unicast packet (in other words, the packet is a broadcast packet or a multicast packet), the packet is not output to the transfer processing unit 103, but is discarded. The packet discarded herein is transferred to the wireless master unit 31 or 32 by a transfer function of a switching hub (not illustrated in Fig. 6). When the transferred packet is a multicast packet, normal transmission processing for a multicast packet is performed on a plurality of particular devices that are destinations of the multicast packet. When the transferred packet is a broadcast packet, the packet is broadcasted as a broadcast frame to all the wireless terminals 20 connected to the wireless master unit 31 or 32.

The transfer processing unit 103 encapsulates a packet output from the packet type determination unit 102 and to be transmitted to a device on the NW2 side, and outputs the encapsulated packet to the communication unit 104. Specifically, the transfer processing unit 103 selects the wireless terminal 20 appropriate as a destination by referring to a destination MAC address of a packet to be transferred. The transfer processing unit 103 encapsulates a packet by using a packet addressed to the wireless terminal 20. Note that, for a method of selecting a transfer destination, an approach similar to normal MAC address learning of a switching hub can be used. The packet type determination unit 102 and the transfer processing unit 103 are equivalent to the data processing unit 4 according to the first example embodiment.

Further, the transfer processing unit 103 determines, for a packet received by the communication unit 104, whether a packet is an encapsulated unicast packet. When determining that a packet to be determined is an encapsulated unicast packet, the transfer processing unit 103 decapsulates the packet. When a destination of a decapsulated packet is other than the own apparatus (the relay apparatus 10), the transfer processing unit 103 outputs the packet to the communication unit 101. Further, when a destination of a decapsulated packet is the own apparatus, the transfer processing unit 103 performs normal packet reception processing for the packet. In other words, the transfer processing unit 103 executes both of encapsulation and decapsulation of a packet being relayed by the relay apparatus 10.

The communication unit 104 is a communication unit connected to the NW2 side through the wireless master unit 31 or 32, receives a packet from a device (for example, the communication device 50) on the NW2 side, and transmits a packet output from the transfer processing unit 103 to a device on the NW2 side. The communication unit 104 and the switching hub are equivalent to the transmission unit 5 according to the first example embodiment. Note that, the communication units 101 and 104 are implemented as individual components in the relay apparatus 10 in the second example embodiment, but may be implemented as a single component in the relay apparatus 10.

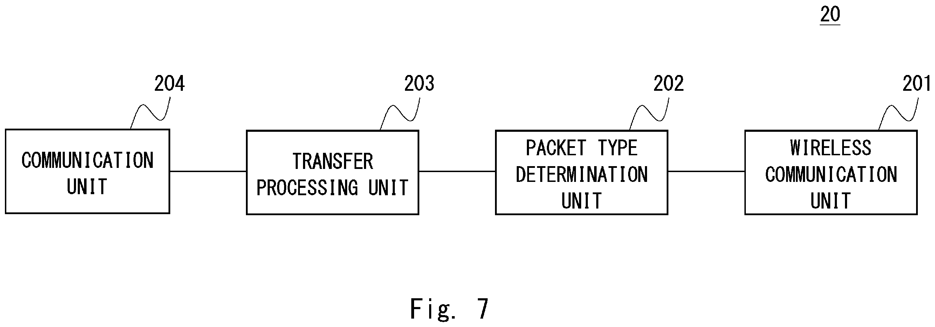

Fig. 7 is a block diagram illustrating a configuration of the wireless terminal 20. As illustrated in Fig. 7, the wireless terminal 20 includes a wireless communication unit 201, a packet type determination unit 202, a transfer processing unit 203, and a communication unit 204. Note that, the number of hardware pieces constituting the wireless communication unit 201 is not limited to one, but may be any plural number.

The wireless communication unit 201 is a communication unit connected to the NW1 side through the wireless master unit 31 or 32, and functions as a reception unit that receives a packet from a device (for example, the communication device 40) on the NW1 side by a wireless communication. Further, the wireless communication unit 201 transmits a packet encapsulated by the transfer processing unit 203 to a device in NW1.

Specifically, the packet type determination unit 202 determines whether a received packet is an encapsulated unicast packet addressed to a device (for example, the communication device 50) on the NW2 side or addressed to the own apparatus (the wireless terminal 20). Further, when a received packet is not an encapsulated unicast packet, the packet type determination unit 202 determines whether the received packet is a broadcast packet or a multicast packet that is addressed to a device on the NW2 side (in other words, that should be transmitted to a device on the NW2 side), or a packet that is not addressed to a device on the NW2 side or the own apparatus (in other words, that should not be transmitted to a device on the NW2 side). After determination, the packet type determination unit 202 outputs the packet together with information indicating a result of determination to the transfer processing unit 203.

The transfer processing unit 203 processes, for a packet received by the wireless communication unit 201, a packet according to a result of determination of the packet type determination unit 202. Specifically, when the packet type determination unit 202 determines that a packet to be determined is an encapsulated unicast packet addressed to a device on the NW2 side or the own apparatus, the transfer processing unit 203 functions as a decapsulation unit that decapsulates the packet. When a destination of the decapsulated packet is other than the own apparatus (the wireless terminal 20), the transfer processing unit 203 outputs the packet to the communication unit 204. Further, when a destination of the decapsulated packet is the own apparatus, the transfer processing unit 203 performs normal packet reception processing for the packet.

Further, when the packet type determination unit 202 determines that a received packet is a broadcast packet or a multicast packet that is addressed to a device on the NW2 side, the transfer processing unit 203 outputs the packet to the communication unit 204 without encapsulating or decapsulating the packet. When the packet type determination unit 202 determines that a received packet is a packet that is not addressed to a device on the NW2 side or the own apparatus, the transfer processing unit 203 discards the packet.

Furthermore, the transfer processing unit 203 encapsulates a packet received from the communication unit 204 and to be transmitted to a device on the NW1 side, and outputs the encapsulated packet to the wireless communication unit 201. Specifically, the transfer processing unit 203 selects the communication device 40 appropriate as a destination by referring to a destination media access control (MAC) address of a packet to be transferred. The transfer processing unit 203 encapsulates a packet by using a packet addressed to the communication device 40. Note that, for a method of selecting a transfer destination, an approach similar to normal MAC address learning of a switching hub can be used.

The communication unit 204 is a communication unit connected to the NW2 side, and transmits a packet to a device (for example, the communication device 50) on the NW2 side. The packet to be transmitted is a packet decapsulated by the transfer processing unit 203 or a multicast packet or a broadcast packet transferred as is without being decapsulated by the transfer processing unit 203. When a destination of the packet decapsulated by the transfer processing unit 203 is the wireless terminal 20, the communication unit 204 transmits the packet to the wireless terminal 20. Further, the communication unit 204 receives a packet to be transmitted to a device on the NW1 side from a device on the NW2 side, and outputs the packet to the transfer processing unit 203.

Note that, since the transfer processing unit 203 needs to encapsulate or decapsulate a packet at a time of communication using a unicast packet, the wireless communication unit 201 and the communication unit 204 are not directly connected (a direct connection is, for example, a connection in a bridge configuration.). Thus, the packet type determination unit 202 and the transfer processing unit 203 need to output a multicast packet or a broadcast packet other than a unicast packet received by the wireless communication unit 201 to the communication unit 204, as described above.

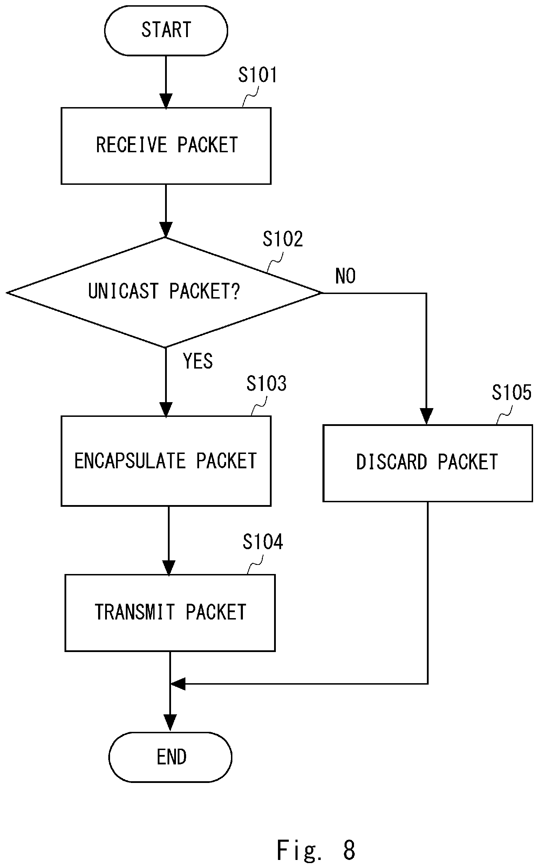

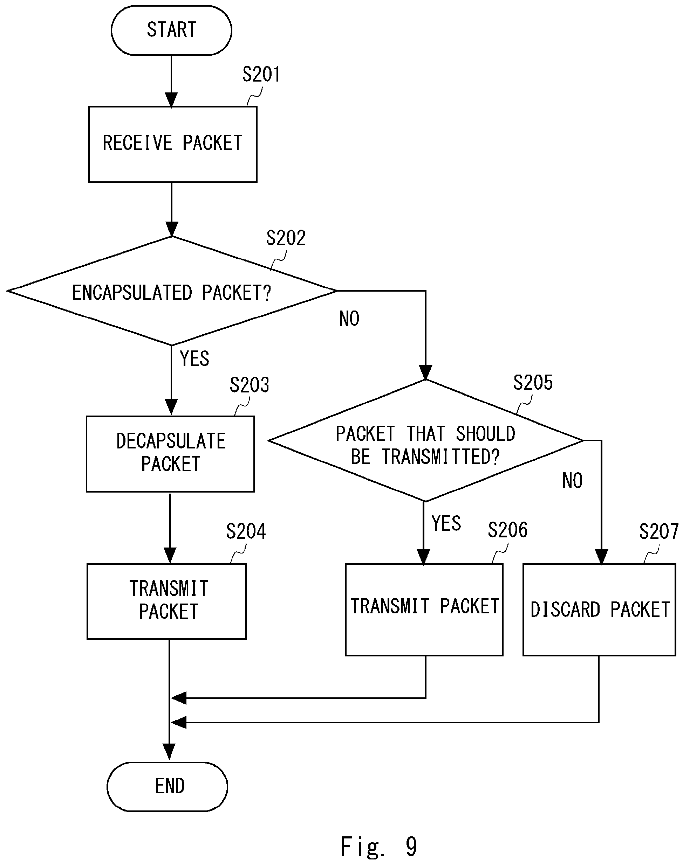

Hereinafter, processing executed by the relay apparatus 10 and the wireless terminal 20 when the communication device 40 transmits a data packet to the communication device 50 is described with reference to Figs. 8 and 9. First, processing of the relay apparatus 10 is described with reference to Fig. 8.

When the communication device 40 transmits a data packet addressed to the communication device 50, the communication unit 101 of the relay apparatus 10 receives the packet (Step S101). Next, the packet type determination unit 102 determines whether the packet is a unicast packet (Step S102).

When the packet is a unicast packet (Yes in Step S102), the transfer processing unit 103 encapsulates the packet by using a protocol such as GRE or L2TP (Step S103). Note that, the transfer processing unit 103 refers to a destination MAC address of the received packet to thereby select, as a destination of the packet to be encapsulated, the wireless terminal 20 present on a communication path with the destination MAC address. After completion of encapsulation, the communication unit 104 transmits the encapsulated packet to the wireless terminal 20 (Step S104).

Note that, when the packet received by the relay apparatus 10 is determined as not a unicast packet in Step S102 (No in Step S102), the transfer processing unit 103 discards the packet (Step S105). The packet discarded herein is a multicast packet or a broadcast packet, and is thus transferred to the wireless master unit 31 or 32 by a transfer function of a switching hub. When the transferred packet is a multicast packet, normal transmission processing for a multicast packet is performed on a plurality of particular devices that are destinations of the multicast packet. When the transferred packet is a broadcast packet, the packet is broadcasted as a broadcast frame to all the wireless terminals 20 connected to the wireless master unit 31 or 32.

Next, processing of the wireless terminal 20 is described with reference to Fig. 9. First, the wireless communication unit 201 of the wireless terminal 20 receives a packet by a wireless communication via the wireless master unit 31 or 32 (Step S201). Next, the packet type determination unit 202 determines whether the packet is a packet encapsulated by the relay apparatus 10 (Step S202).

When the packet to be determined is an encapsulated packet (Yes in Step S202), the transfer processing unit 203 decapsulates the packet (Step S203). Thereafter, the transfer processing unit 203 refers to a destination address of the decapsulated packet, determines that a destination is the communication device 50, and outputs the packet to the communication unit 204. The communication unit 204 transmits the decapsulated packet to the communication device 50 (Step S204). Note that, when a destination is the wireless terminal 20, the wireless terminal 20 itself performs reception processing for the packet.

Further, when the packet to be determined is determined as not an encapsulated packet in Step S202 (No in Step S202), the packet type determination unit 202 determines whether the packet to be determined is a broadcast packet or a multicast packet that is addressed to a device on the NW2 side (Step S205). When the packet to be determined is determined as a packet that should be transmitted to a device on the NW2 side as described above (Yes in Step S205), the transfer processing unit 203 outputs the packet to the communication unit 204 without encapsulating or decapsulating the packet. The communication unit 204 transmits the packet to a device on the NW2 side that is a destination (Step S206). For example, when the packet is a broadcast packet, the communication unit 204 transmits the packet to be transmitted simultaneously to all devices belonging to NW2.

When the packet type determination unit 202 determines that the packet to be determined is not a packet that should be transmitted to a device on the NW2 side (No in Step S205), the transfer processing unit 203 discards the packet (Step S207).

As described above, according to the configuration of the communication system described in the second example embodiment, the packet type determination unit 102 of the relay apparatus 10 determines a packet to be transmitted as a unicast packet, and the transfer processing unit 103 encapsulates the unicast packet. On the other hand, the packet type determination unit 202 of the wireless terminal 20 determines a received packet as a unicast packet, and the transfer processing unit 203 decapsulates the unicast packet. With this configuration, even when a plurality of wireless paths are provided between the relay apparatus 10 and the wireless terminal 20 as illustrated in Figs. 1 to 3 associated with the related art, the wireless paths can be virtualized by encapsulation, and flexible path switching, according to status changes of a wireless communication or the like, can be achieved.

Further, encapsulating a multicast packet or a broadcast packet increases a communication load for wireless communication because the packet is unicasted, as described in the first example embodiment. However, according to the second example embodiment, the relay apparatus 10 transmits a multicast packet or a broadcast packet to the wireless terminal 20 without encapsulating the multicast packet or the broadcast packet. This eliminates need to generate and transmit a unicast packet individually to individual devices that are destinations of the packet, and can prevent increase in a communication load caused by encapsulation.

For example, when ten wireless terminals 20 are wirelessly connected to the wireless master unit 31 and the relay apparatus 10 encapsulates and transmits a broadcast packet to the wireless terminals 20, the relay apparatus 10 needs to generate ten unicast packets. However, in the configuration of the communication system according to the second example embodiment, since the relay apparatus 10 is capable of broadcasting using one broadcast frame to all the ten wireless terminals 20, a wireless communication load is reduced to about 1/10. In other words, a radio frequency band for use in communication is reduced to about 1/10.

Note that, the above-described processing executed by the relay apparatus 10 or the wireless terminal 20 is applicable to not only wireless communication data, but also communication data transmitted by wire.

Hereinafter, other example embodiments are described.

### Third Example Embodiment

The configuration of the communication system or the communication apparatus described in the first and second example embodiments is applicable to a factory (a so-called smart factory) or the like that utilizes the Internet of things (IoT) technology and includes a large number of senser apparatuses wirelessly connected to a management apparatus. For example, when the configuration of the communication system S described in the second example embodiment is applied to a smart factory, a plurality (often a large number such as several tens to several hundreds) of communication devices 50 are provided in each of a plurality of areas (production lines, floors, and the like), and may act as sensor apparatuses for detecting a measurement target. The communication device 40 is a management apparatus in the communication system S, receives a result of detection of the measurement target from all the sensor apparatuses (the communication devices 50), and transmits data for giving an instruction to all the sensor apparatuses. One wireless terminal 20 is provided in each area, and relays communications between the communication device 40 and the plurality of communication devices 50. The relay apparatus 10 functions as a repeater provided on the communication device 40 side. In such an environment, while (1) it is necessary to ensure communication quality of wireless communications between the communication device 40 and the plurality of communication devices 50, (2) it is preferred to reduce a wireless communication load since the number of required wireless terminals 20 or communication devices 50 is large. In such a case, requirements (1) and (2) can be satisfied by using the configuration of the communication system or the communication apparatus described in the first and second example embodiments.

In an example of the above-described smart factory, a communication for transmitting a command to control the sensor apparatuses (the communication devices 50) is performed as a communication using a unicast packet. A communication for distributing a video taken by a camera or the like arranged in the factory is performed as a communication using a multicast packet. This is because the video distribution is performed assuming that a video is not only displayed on a central display panel (for example, a display unit of the communication device 40), but also transmitted simultaneously to a plurality of devices, for example, as in a case in which on-site workers use tablets to see a state inside the factory. A communication for transmitting an ARP packet to the sensor apparatuses at a time of starting a unicast communication is performed as a communication using a broadcast packet.

### Fourth Example Embodiment

Further, the transmission apparatus 3 according to the first example embodiment or the relay apparatus 10 according to the second example embodiment may select encapsulation/decapsulation of a multicast packet or a broadcast packet, based on a status of a wireless communication. The status of a wireless communication described herein is, for example, (a) an amount of multicast packets or broadcast packets per unit time (for example, the number of packets per second), (b) the total number of communication devices connected to a wireless communication network, (c) a degree of congestion in a network, and (d) wireless communication quality.

For example, in the second example embodiment, the relay apparatus 10 detects an amount of broadcast packets to be transmitted to the NW2 side per unit time, and, when the detected amount is less than a predetermined threshold value, the transfer processing unit 103 encapsulates a packet to be transmitted even when the packet type determination unit 102 determines the packet as a broadcast packet. The communication unit 104 transmits the encapsulated broadcast packet to the NW2 side. When the detected amount is equal to or more than a predetermined threshold value, the relay apparatus 10 transmits the broadcast packet to the NW2 side without encapsulating the broadcast packet, as described in detail in the second example embodiment. Note that, the control described in the fourth example embodiment may be performed by a wireless communication, or may be performed by a communication by wire.

Further, the relay apparatus 10 can acquire at least one piece of information including the number of the wireless terminals 20 for receiving packet data by a wireless communication, a degree of congestion of a wireless communication between the wireless terminal 20 and the wireless master unit 31 or 32, and quality of a wireless communication. Examples of the degree of congestion of a wireless communication include, for example, a quantity of packets (especially, the number of packets per unit time) being transferred by the relay apparatus 10 and a ratio of time being in a busy time of a wireless communication. Examples of the quality of a wireless communication include a received signal strength indicator (RSSI), a packet loss rate, and a packet retransmission rate. The degree of congestion of a wireless communication and the quality of a wireless communication are represented by such quantitative numerical values. For example, a communication is determined as congested when the quantity of packets or the ratio of time being in a busy time is equal to or more than a predetermined threshold value, and a communication is determined as not congested when the quantity of packets or the ratio of time being in a busy time is less than a predetermined threshold value. Similarly, the quality of a wireless communication is determined as high when the received signal strength indicator is equal to or more than a predetermined threshold value, and the quality of a wireless communication is determined as low when the received signal strength indicator is less than a predetermined threshold value. The quality of a wireless communication is determined as high when the packet loss rate and the packet retransmission rate are less than a predetermined threshold value, and the quality of a wireless communication is determined as low when the packet loss rate and the packet retransmission rate are equal to or more than a predetermined threshold value.

These pieces of information may be acquired by the relay apparatus 10 by being detected intermittently or constantly by the wireless terminal 20 or the wireless master unit 31 or 32 and transmitted to the relay apparatus 10. Alternatively, the information may be stored in the relay apparatus 10, or may be acquired by the relay apparatus 10 by being input to the relay apparatus 10 by an administrator. When the relay apparatus 10 transmits a packet directly by a wireless communication, the relay apparatus 10 can also detect these pieces of information. When the relay apparatus 10 transmits a broadcast packet, the relay apparatus 10 changes, based on the acquired information, whether to encapsulate the packet by the transfer processing unit 103.

For example, when the number of the wireless terminals 20 receiving broadcast packet data by a wireless communication is less than a predetermined threshold value, the transfer processing unit 103 encapsulates a packet to be transmitted by the relay apparatus 10 even when the packet is determined as a broadcast packet by the packet type determination unit 102. Conversely, when the number of the wireless terminals 20 is equal to or more than a predetermined threshold value, the relay apparatus 10 transmits a broadcast packet to the NW2 side without encapsulating the broadcast packet, as described in detail in the second example embodiment.

Similarly, when the degree of congestion of a wireless communication between the wireless terminal 20 and the wireless master unit 31 or 32 is low, the transfer processing unit 103 may encapsulate a packet to be transmitted by the relay apparatus 10 even when the packet is determined as a broadcast packet by the packet type determination unit 102. Similar processing can be performed even when the quality of a wireless communication is high. Conversely, when the degree of congestion of a wireless communication between the wireless terminal 20 and the wireless master unit 31 or 32 is high, the relay apparatus 10 may transmit a broadcast packet to the NW2 side without encapsulating the broadcast packet. Similar processing can be performed even when the quality of a wireless communication is low.

When a packet encapsulated by the wireless terminal 20 is received, the packet is determined as encapsulated by the packet type determination unit 202, and the packet is decapsulated by the transfer processing unit 203. Then, the communication unit 204 transmits the decapsulated broadcast packet to a device on the NW2 side.

In a wireless communication using a wireless LAN, use of a broadcast packet enables distribution of data with one frame to all wireless terminals connected to a wireless master unit, which provides high communication efficiency. However, in a communication using a unicast packet, for example, acknowledgement and retransmission by use of the transmission control protocol (TCP) are performed, whereas, in a communication using a broadcast packet, such processing is not performed. Therefore, a communication using a broadcast packet can be said as having low reliability of a wireless communication compared with a communication using a unicast packet. Thus, when encapsulating a broadcast packet does not place an excessive load on a wireless communication, reliability of a wireless communication can be improved by encapsulating a broadcast packet.

Note that, while parameters (a) to (d) are listed as statuses of a wireless communication, only one of these parameters may be used, or two or more parameters of these parameters may be used. Further, the above-described processing can be executed also by using a multicast packet rather than a broadcast packet.

### Fifth Example Embodiment

Furthermore, the relay apparatus 10 may select whether to encapsulate or not to encapsulate a packet according to required quality of a communication application. Specifically, the transfer processing unit 103 of the relay apparatus 10 encapsulates a broadcast packet to be transmitted in a communication for an application with a high latency requirement, thereby achieving a highly reliable communication by unicast. The communication for an application with a high latency requirement is, for example, transmission of a control command to a device in a factory, an automatic guided vehicle (AGV), and the like.

On the other hand, the transfer processing unit 103 of the relay apparatus 10 does not encapsulate a broadcast packet in an application with a low latency requirement, thereby reducing a load on a wireless communication. The application with a low latency requirement is, for example, a communication for regularly collecting an operation log of a device in a factory. This processing can hold balance between both keeping a low load on a wireless communication and achieving required quality of an application. Further, the above-described processing can be executed also by using a multicast packet rather than a broadcast packet. Further, the control described in the fifth example embodiment may be performed by a wireless communication, or may be performed by a communication by wire.

### Sixth Example Embodiment

The transmission apparatus 3 according to the first example embodiment and the relay apparatus 10 or the wireless terminal 20 according to the second example embodiment may include a plurality of tunnel interfaces, as described in the related art illustrated in Figs. 1 to 3. Each apparatus or terminal selects a tunnel interface with best communication quality from among a plurality of tunnel interfaces, and the selected tunnel interface functions as a communication unit that transmits or receives data. A function of the communication unit is as described in detail in the first and second example embodiments. An L2 tunnel can be used as a tunnel interface, and an L2 switch can be used as a switch for use in switching of a tunnel interface.

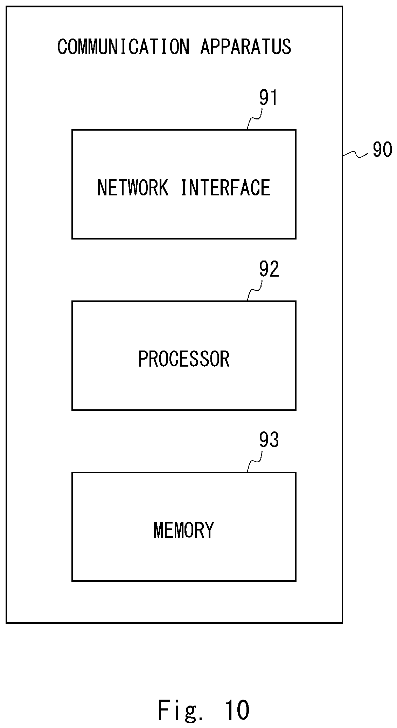

Fig. 10 is a block diagram illustrating a hardware configuration example of the transmission apparatus 3 according to the first example embodiment and the relay apparatus 10 or the wireless terminal 20 according to the second example embodiment. Referring to Fig. 10, a communication apparatus 90 that is a general term for the above-described apparatus and the like includes a network interface 91, a processor 92, and a memory 93. The network interface 91 can transmit and receive, by a wireless communication or a communication by wire, data to and from an apparatus and the like connected with the communication apparatus 90.

The processor 92 performs processing of the apparatus described in the above example embodiments by reading software (a computer program) from the memory 93 and executing the software. The processor 92 may be, for example, a microprocessor, a micro-processing unit (MPU), or a central processing unit (CPU). The processor 92 may include a plurality of processors.

The memory 93 is configured by a combination of a volatile memory and a non-volatile memory. The memory 93 may include a storage arranged separately from the processor 92. In this case, the processor 92 may access the memory 93 through an unillustrated input/output (I/O) interface.

In the example in Fig. 10, the memory 93 is used to store software modules. The processor 92 can perform processing of the apparatus and the like described in the above example embodiments by reading these software modules from the memory 93 and executing the software modules.

As described by using Fig. 10, each processor included in the apparatus and the like according to the above example embodiments executes one or a plurality of programs that include instructions for causing a computer to perform an algorithm described by using the drawings. This processing can achieve the communication method described in the first and second example embodiments.

In the example described above, a program can be stored by using various types of non-transitory computer readable media and supplied to a computer. The non-transitory computer readable media include various types of tangible storage media. Examples of the non-transitory computer readable media include a magnetic storage medium (for example, a flexible disk, a magnetic tape, and a hard disk drive), a magneto-optical storage medium (for example, a magneto-optical disk), a CD-read only memory (ROM), a CD-R, a CD-R/W, and a semiconductor memory (for example, a mask ROM, a programmable ROM (PROM), an erasable PROM (EPROM), a flash ROM, and a random access memory (RAM)). Further, a program may be supplied to a computer by a various types of transitory computer readable media. Examples of the transitory computer readable media include an electrical signal, an optical signal, and an electromagnetic wave. The transitory computer readable media can supply a program to a computer through a wired communication channel such as an electrical wire and an optical fiber or a wireless communication channel.

While the present disclosure has been described above with reference to the example embodiments, the present disclosure is not limited to the above. Various modifications that can be understood by those skilled in the art can be made to the configurations and the details of the present disclosure within the scope of the disclosure.

This application is based upon and claims the benefit of priority from Japanese patent application No. 2020-107454, filed on June 23, 2020, the disclosure of which is incorporated herein in its entirety by reference.

### Reference Signs List

- 1, S: Communication system
- 2: Reception device
- 3: Transmission apparatus
- 4: Data processing unit
- 5: Transmission unit
- 10: Relay apparatus
- 101: Communication unit
- 102: Packet type determination unit
- 103: Transfer processing unit
- 104: Communication unit
- 20: Wireless terminal
- 201: Wireless communication unit
- 202: Packet type determination unit
- 203: Transfer processing unit
- 204: Communication unit
- 31, 32: Wireless master unit
- 40, 50: Communication device

## Claims

1. A communication system comprising:
a reception device; and
a transmission apparatus configured to communicate with the reception device,
wherein the transmission apparatus includes:
data processing means for encapsulating communication data relating to a communication when the communication data are unicast data, and not encapsulating the communication data at least either when the communication data are multicast data or when the communication data are broadcast data; and
transmission means for transmitting the communication data encapsulated by the data processing means to the reception device.

2. The communication system according to Claim 1, wherein the data processing means does not encapsulate the communication data both when the communication data are multicast data and when the communication data are broadcast data.

3. The communication system according to Claim 1 or 2, wherein the reception device includes:
reception means for receiving the communication data;
decapsulation means for decapsulating the communication data when the reception means receives the encapsulated communication data; and
transmission means for transmitting the communication data to a communication device connected to the reception device by a network when the reception means receives the not encapsulated communication data.

4. The communication system according to any one of Claims 1 to 3, wherein
the transmission means transmits the multicast data or the broadcast data not encapsulated by the data processing means to the reception device, and
the transmission apparatus detects an amount of the multicast data or the broadcast data being transmitted by the transmission means per unit time, and changes, based on the detected amount, whether to encapsulate the multicast data or the broadcast data by the data processing means.

5. The communication system according to any one of Claims 1 to 4, wherein
the transmission means transmits the multicast data or the broadcast data not encapsulated by the data processing means to the reception device,
the reception device receives the communication data by a wireless communication, and
the transmission apparatus changes whether to encapsulate, by the data processing means, the multicast data or the broadcast data to be transmitted by the transmission apparatus, based on at least one piece of information including the number of the reception devices receiving the communication data by the wireless communication, a degree of congestion of the wireless communication, and quality of the wireless communication.

6. The communication system according to any one of Claims 1 to 5, wherein
the transmission means transmits the multicast data or the broadcast data not encapsulated by the data processing means to the reception device, and
the transmission apparatus changes whether to encapsulate, by the data processing means, the multicast data or the broadcast data to be transmitted by the transmission apparatus, based on a latency requirement in a multicast or broadcast communication.

7. A communication apparatus comprising:
data processing means for encapsulating communication data relating to a communication when the communication data are unicast data, and not encapsulating the communication data at least either when the communication data are multicast data or when the communication data are broadcast data; and
transmission means for transmitting the communication data encapsulated by the data processing means to another device.

8. The communication apparatus according to Claim 7, wherein the data processing means does not encapsulate the communication data both when the communication data are multicast data and when the communication data are broadcast data.

9. A communication method to be executed by a communication apparatus, comprising:
encapsulating communication data relating to a communication and transmitting the encapsulated communication data to a reception device when the communication data are unicast data; and
encapsulating the communication data at least either when the communication data are multicast data or when the communication data are broadcast data.

10. A non-transitory computer readable medium storing a program that causes a computer to execute:
encapsulating communication data relating to a communication and transmitting the encapsulated communication data to a reception device when the communication data are unicast data; and
encapsulating the communication data at least either when the communication data are multicast data or when the communication data are broadcast data.
